(19) Europäisches Patentamt
European Patent Office
Office européen des brevets

(11) **EP 4 550 854 A1**

(12) **EUROPEAN PATENT APPLICATION**
published in accordance with Art. 153(4) EPC

(43) Date of publication:
**07.05.2025 Bulletin 2025/19**

(21) Application number: **23829360.9**

(22) Date of filing: **16.01.2023**

(51) International Patent Classification (IPC):
*H04W 4/029* (2018.01)

(52) Cooperative Patent Classification (CPC):
**H04W 4/029; H04W 24/08;** Y02D 30/70

(86) International application number:
**PCT/CN2023/072385**

(87) International publication number:
**WO 2024/001167 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.06.2022 CN 202210744625**

(71) Applicant: **ZTE Corporation
Shenzhen, Guangdong 518057 (CN)**

(72) Inventor: **ZHANG, Yujie
Shenzhen, Guangdong 518057 (CN)**

(74) Representative: **Boult Wade Tennant LLP
Salisbury Square House
8 Salisbury Square
London EC4Y 8AP (GB)**

(54) **POSITIONING METHOD AND DEVICE FOR TRANSCEIVER, AND STORAGE MEDIUM**

(57) The present disclosure belongs to the technical field of indoor positioning. Provided are a positioning method and device for a transceiver, and a storage medium. The method comprises: controlling a user equipment to send test signals respectively at a starting location, a first location and a second location to a to-be-determined transceiver and a reference transceiver, and acquiring time delay difference values; and in the case that the to-be-determined transceiver and the reference transceiver are located at the same height, determining, on the basis of the height of the to-be-determined transceiver, a first time delay difference value, a second time delay difference value, a third time delay difference value, the coordinates of the first location, the coordinates of the second location, and the coordinates of the location of the to-be-determined transceiver.

Fig. 1

**Description**

**CROSS-REFERENCE TO RELATED APPLICATIONS**

The present disclosure claims priority to Chinese Patent Application No. 202210744625.3, entitled "POSITIONING METHOD AND DEVICE FOR TRANSCEIVER, AND STORAGE MEDIUM" filed on June 28, 2022, the entire content of which is incorporated herein by reference.

**TECHNICAL FIELD**

The present disclosure relates to the technical field of indoor positioning, in particular to a positioning method and device for a transceiver, and a storage medium.

**BACKGROUND**

In a positioning system, whether it is positioning by current Bluetooth angle of arrival (AOA), positioning by real time trace (RTT) in a 5G communication system or positioning by sending an uplink surveying and mapping signal (uplink time difference of arrival (UTDOA)) with a mobile terminal, coordinates of a location of a transceiver need to be determined before a positioning service is opened. An existing manner for determining the coordinates mainly uses a total station for forward surveying and mapping. This manner needs an engineer to carry the total station on his back for surveying and mapping the coordinates of the location of the transceiver one by one. This manner of surveying and mapping by the total station has a main drawback of failure in surveying and mapping coordinates of an invisible transceiver. Therefore, how to solve a problem of high difficulty of surveying and mapping the coordinates of the invisible transceiver at present becomes an urgent technical problem to be solved now.

**SUMMARY**

The present disclosure provides a positioning method and device for a transceiver, and a storage medium and aims to solve the technical problem of high difficulty of surveying and mapping coordinates of the invisible transceiver at present.

In a first aspect, the present disclosure provides a positioning method for a transceiver, including: controlling a user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is a time difference value of receiving the first test signal by the reference transceiver and the to-be-determined transceiver, the second time delay difference value is a time difference value of receiving the second test signal by the reference transceiver and the to-be-determined transceiver, and the third time delay difference value is a time difference value of receiving the third test signal by the reference transceiver and the to-be-determined transceiver; and acquiring a height of the to-be-determined transceiver in the case that the to-be-determined transceiver and the reference transceiver are located at the same height, and determining coordinates of a location of the to-be-determined transceiver on the basis of the height of the to-be-determined transceiver, the first time delay difference value, the second time delay difference value, the third time delay difference value, coordinates of the first location and coordinates of the second location.

In a second aspect, the present disclosure further provides a positioning device for a transceiver. The positioning device for the transceiver includes a processor, a memory, a computer program stored on the memory and capable of being executed by the processor and a data bus configured to implement connection and communication between the processor and the memory, wherein the computer program, when executed by the processor, implements any positioning method for the transceiver provided by the specification of the present disclosure.

In a third aspect, the present disclosure further provides a storage medium, used for computer readable storage and storing one or more programs, the one or more programs being capable of being executed by one or more processors so as to implement any positioning method for the transceiver provided by the specification of the present disclosure.

**BRIEF DESCRIPTION OF THE DRAWINGS**

In order to more clearly describe the technical solutions of the present disclosure, accompanying drawings needed for the description of the embodiments are introduced briefly. Apparently, the accompanying drawings in the following description are some embodiments of the present disclosure, and those ordinarily skilled in the art can also obtain other accompanying drawings according to these accompanying drawings without making creative work.

Fig. 1 is a schematic flowchart of a positioning method for a transceiver provided by the present disclosure.

Fig. 2 is a schematic flowchart of substeps of the positioning method for the transceiver in Fig. 1.

Fig. 3 is a schematic diagram of a scene for implementing a positioning method for a transceiver provided by the present disclosure.

Fig. 4 is a schematic flowchart of another positioning method for a transceiver provided by the present disclosure.

Fig. 5 is a schematic structural block diagram of a positioning device for a transceiver provided by the present disclosure.

## DETAILED DESCRIPTION

The technical solutions of the present disclosure are clearly and completely described in the following with reference to the accompanying drawings in the present disclosure. Apparently, the described embodiments are some rather than all of the embodiments of the present disclosure. All other embodiments obtained by those ordinarily skilled in the art based on the embodiments of the present disclosure without making creative work fall within the protection scope of the present disclosure.

The flowcharts in the accompanying drawings are only for example description instead of necessarily including all contents and operations/steps nor being executed necessarily in the described order. For example, some operations/steps may also be decomposed, combined or partially merged, so an actual executing order may change according to actual situations.

It is to be understood that terms used in the specification of the present disclosure are merely intended to describe specific embodiments but not to limit the present disclosure. A singular form "a/an" , "one" and "the" as used in the specification and the appended claims of the present disclosure is intended to include a plural form unless indicated clearly in the context otherwise.

The present disclosure provides a positioning method and device for a transceiver, and a storage medium. The positioning method for the transceiver may be applied to a mobile terminal. The mobile terminal may be a mobile phone, a tablet computer, a notebook, a desktop computer, a personal digital assistant, a wearable device and other electronic devices.

Some embodiments of the present disclosure are described in detail below with reference to accompanying drawings. The embodiments described below and features in the embodiments may be mutually combined without conflicts.

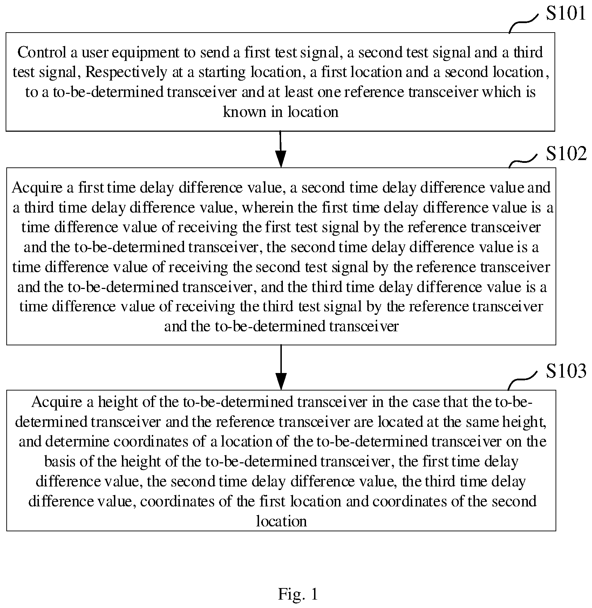

The positioning method for the transceiver provided by the embodiment of the present disclosure is introduced in detail below with reference to a scene illustrated in Fig. 1. It needs to be noted that the scene in Fig. 1 is only used for explaining the positioning method for the transceiver provided by the present disclosure instead of constituting a limitation on an application scene of the positioning method for the transceiver provided by the present disclosure.

Please refer to Fig. 1, Fig. 1 is a schematic flowchart of a positioning method for a transceiver provided by the present disclosure.

As shown in Fig. 1, the positioning method for the transceiver includes step S101 to step S103.

Step S101: a user equipment is controlled to send a first test signal, a second test signal and a third test signal, respectively at a starting location, a first location and a second location, to a to-be-determined transceiver and at least one reference transceiver which is known in location.

In an embodiment, systems for supporting this embodiment include a webmaster, a base station, a terminal and the like. The webmaster plays a role of a computing platform in the present disclosure or may also be a universal server. The base station plays a role in receiving signals and calculates measurement parameters such as signal time delay in the base station. The terminal plays a role in sending signals and may send and receive beacons.

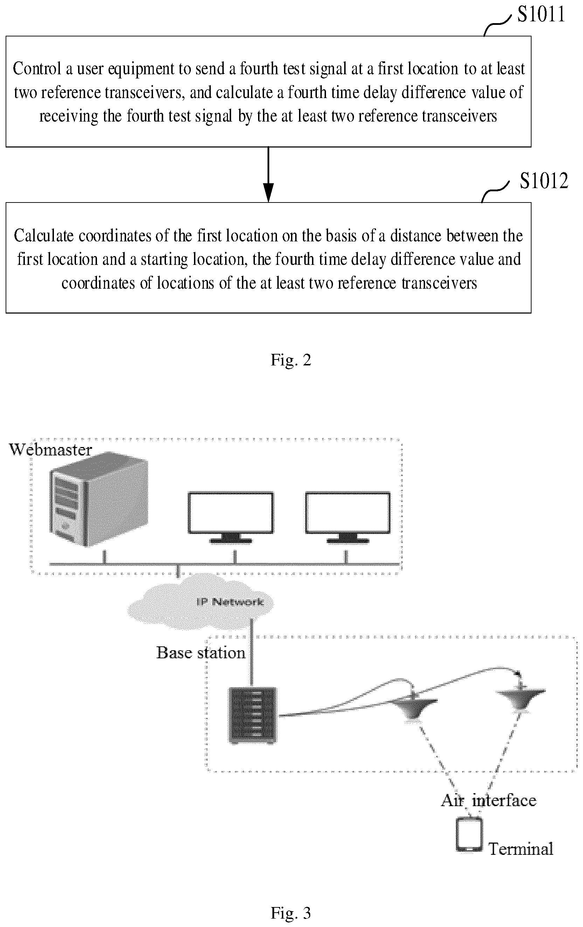

In an exemplary embodiment, referring to Fig. 2, before step S101, the method includes: substep S1011 to substep S1014.

Substep S1011: a user equipment is controlled to send a fourth test signal at a first location to at least two reference transceivers, and a fourth time delay difference value of receiving the fourth test signal by the at least two reference transceivers is calculated.

Substep S1012: coordinates of the first location are calculated on the basis of a distance between the first location and a starting location, the fourth time delay difference value and coordinates of locations of the at least two reference transceivers.

Based on the above embodiment, before substep S1012, the method further includes: coordinates of the first location are calculated according to a first preset expression and a second preset expression, wherein the first preset expression and the second preset expression are respectively:

$$d_{10} = \sqrt{(x_1 - x_0)^2 + (y_1 - y_0)^2 + (z_1 - z_0)^2} \, ,$$

$$\sqrt{(x_1 - x_a)^2 + (y_1 - y_a)^2 + (z_1 - z_a)^2} - \sqrt{(x_1 - x_b)^2 + (y_1 - y_b)^2 + (z_1 - z_b)^2} = C*(\Delta rxt_4) \, ,$$

where $(x_0, y_0, z_0)$ is coordinates of the starting location, $(x_1, y_1, z_1)$ is the coordinates of the first location, $d_{10}$ is the distance between the first location and the starting location, $(x_a, y_a, z_a)$ is coordinates of one reference transceiver, $(x_b, y_b, z_b)$ is coordinates of another reference transceiver, C is light speed, and $\Delta rxt_4$ is the fourth time delay difference value.

A result obtained by calculating according to the preset expressions is the coordinates of the first location.

Step S102: a first time delay difference value, a second time delay difference value and a third time delay difference value are acquired, wherein the first time delay difference value is a time difference value of receiving the first test signal by the reference transceiver and the to-be-determined transceiver, the second time delay difference value is a time difference value of receiving the second test signal by the reference transceiver and the to-be-determined transceiver, and the third time delay difference value is a time difference value of receiving the third test signal by the reference transceiver and the to-be-determined transceiver.

Step S103: a height of the to-be-determined transceiver is acquired in the case that the to-be-determined transceiver and the reference transceiver are located at the same height, and coordinates of a location of the to-be-determined transceiver are determined on the basis of the height of the to-be-determined transceiver, the first time delay difference value, the second time delay difference value, the third time delay difference value, the coordinates of the first location and coordinates of the second location.

In an exemplary embodiment, a coordinate calculating process involved in this embodiment is the following process: in the case that location coordinates $P_a(x_a, y_a, z_a)$ and $P_b(x_b, y_b, z_b)$ of two transceivers A and B and a coordinate point $P_0(x_0, y_0, z_0)$ of the starting location of the user equipment (UE) are known, it is assumed that all base stations are in clock synchronization, coordinates of a location of a base station C is solved.

The UE moves to a coordinate point $P_1(x_1, y_1, z_1)$ of the first location, a distance $d_{10}$ between the coordinate point of the starting location of the UE and the coordinate point of the first location of the UE is determined, the UE sends a signal at the coordinate point of the first location, the two transceivers with the known coordinates receive the signal sent by the UE at the coordinate point of the first location, and the first time delay difference value is calculated. The first time delay difference value of the transceivers A and B is $\Delta rxt_1$. The UE moves to a coordinate point $P_2(x_2, y_2, z_2)$ of the second location, a distance $d_{21}$ between the coordinate point of the second location of the UE and the coordinate point of the first location of the UE is determined, the UE sends a signal at the coordinate point of the second location, the two transceivers with the known coordinates receive the signal sent by the UE at the coordinate point of the second location, and the second time delay difference value is calculated. The second time delay difference value of the transceivers A and B is $\Delta rxt_2$.

The coordinate point $P_0(x_0, y_0, z_0)$ of the first location of the UE, and the location coordinate points $P_a(x_a, y_a, z_a)$ and $P_b(x_b, y_b, z_b)$ of the two transceivers are known, and it is assumed that $z_0 = z_1 = z_2$, then $z_1$ and $z_2$ are known.

$$d_{10} = \sqrt{(x_1 - x_0)^2 + (y_1 - y_0)^2 + (z_1 - z_0)^2} \quad (1)$$

$$d_{21} = \sqrt{(x_2 - x_1)^2 + (y_2 - y_1)^2 + (z_2 - z_1)^2} \quad (2)$$

$$\sqrt{(x_1 - x_a)^2 + (y_1 - y_a)^2 + (z_1 - z_a)^2} - \sqrt{(x_1 - x_b)^2 + (y_1 - y_b)^2 + (z_1 - z_b)^2} = C*(\Delta rxt_{1ab}) \quad (3)$$

$$\sqrt{(x_2 - x_a)^2 + (y_2 - y_a)^2 + (z_2 - z_a)^2} - \sqrt{(x_2 - x_b)^2 + (y_2 - y_b)^2 + (z_2 - z_b)^2} = C*(\Delta rxt_{2ab}) \quad (4)$$

The coordinate point $P_1(x_1, y_1, z_1)$ of the UE at the first location and the coordinate point $P_2(x_2, y_2, z_2)$ of the UE at the second location are obtained through calculating, then three expressions are listed, i.e., through uplink signals, namely the third time delay difference value and the fourth time delay difference value from the coordinate points of the three locations of the UE to the transceivers A and C, the coordinates of the location of the transceiver C are solved.

$$\sqrt{(x_0 - x_a)^2 + (y_0 - y_a)^2 + (z_0 - z_a)^2} - \sqrt{(x_0 - x_c)^2 + (y_0 - y_c)^2 + (z_0 - z_c)^2} = C*(\Delta rxt_{0ac}) \quad (5)$$

$$\sqrt{(x_1 - x_a)^2 + (y_1 - y_a)^2 + (z_1 - z_a)^2} - \sqrt{(x_1 - x_c)^2 + (y_1 - y_c)^2 + (z_1 - z_c)^2} = C*(\Delta rxt_{1ac}) \quad (6)$$

$$\sqrt{(x_2 - x_a)^2 + (y_2 - y_a)^2 + (z_2 - z_a)^2} - \sqrt{(x_2 - x_c)^2 + (y_2 - y_c)^2 + (z_2 - z_c)^2} = C*(\Delta rxt_{2ac}) \quad (7)$$

This embodiment provides a positioning method for a transceiver, a positioning device for a transceiver and a storage medium. The present disclosure performs controlling a user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is the time difference value of receiving the first test signal by the reference transceiver and the to-be-determined transceiver, the second time delay difference value is the time difference value of receiving the second test signal by the reference transceiver and the to-be-determined transceiver, and the third time delay difference value is the time difference value of receiving the third test signal by the reference transceiver and the to-be-determined transceiver; and acquiring a height of the to-be-determined transceiver in the case that the to-be-determined transceiver and the reference transceiver are located at the same height, and determining the coordinates of the location of the to-be-determined transceiver on the basis of the height of the to-be-determined transceiver, the first time delay difference value, the second time delay difference value, the third time delay difference value, the coordinates of the first location and the coordinates of the second location. In the above manner, the coordinates of the location of an invisible to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved.

Please refer to Fig. 3, Fig. 3 is a schematic diagram of a scene for implementing a positioning method for a transceiver provided by this embodiment. As shown in Fig. 3, the systems for supporting the present disclosure include the webmaster, the base station, the terminal and the like. The webmaster plays a role of a computing platform in the present disclosure or may also be a universal server. The base station plays a role in receiving signals and calculates measurement parameters such as signal time delay in the base station. The terminal plays a role in sending signals and may send and receive beacons.

This embodiment provides a positioning method for a transceiver, a positioning device for a transceiver and a storage medium. The present disclosure performs controlling a user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is the time difference value of receiving the first test signal by the reference transceiver and the to-be-determined transceiver, the second time delay difference value is the time difference value of receiving the second test signal by the reference transceiver and the to-be-determined transceiver, and the third time delay difference value is the time difference value of receiving the third test signal by the reference transceiver and the to-be-determined transceiver; and acquiring the height of the to-be-determined transceiver in the case that the to-be-determined transceiver and the reference transceiver are located at the same height, and determining the coordinates of the location of the to-be-determined transceiver on the basis of the height of the to-be-determined transceiver, the first time delay difference value, the second time delay difference value, the third time delay difference value, the coordinates of the first location and the coordinates of the second location. In the above manner, the coordinates of the location of an invisible to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved.

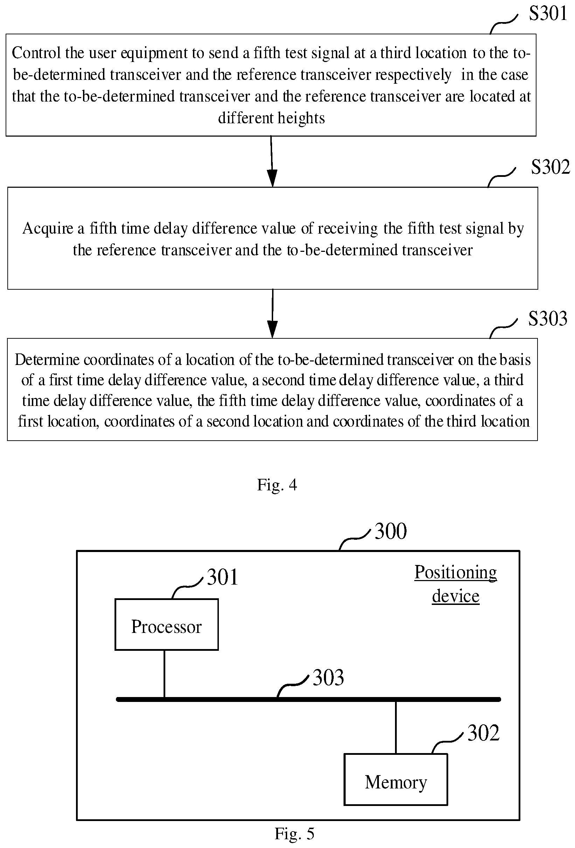

Please refer to Fig. 4, Fig. 4 is a schematic flowchart of another positioning method for a transceiver provided by the present disclosure.

As shown in Fig. 4, after step S102, the positioning method for the transceiver further includes step S301 to step S303.

Step S301: the user equipment is controlled to send a fifth test signal at a third location to the to-be-determined transceiver and the reference transceiver respectively in the case that the to-be-determined transceiver and the reference transceiver are located at different heights. Step S302: a fifth time delay difference value of receiving the fifth test signal by the reference transceiver and the to-be-determined transceiver is acquired. Step S303: the coordinates of the location of the to-be-determined transceiver are determined on the basis of the first time delay difference value, the second time delay difference value, the third time delay difference value, the fifth time delay difference value, the coordinates of the first location, the coordinates of the second location and coordinates of the third location.

In this embodiment, step S303 specifically includes: the coordinates of the location of the to-be-determined transceiver are calculated according to a third preset expression, a fourth preset expression and a fifth preset expression, wherein the third preset expression, the fourth preset expression and the fifth preset expression are respectively as follows:

$$\sqrt{(x_0 - x_a)^2 + (y_0 - y_a)^2 + (z_0 - z_a)^2} - \sqrt{(x_0 - x_c)^2 + (y_0 - y_c)^2 + (z_0 - z_c)^2} = C*(\Delta rxt_1),$$

$$\sqrt{(x_1 - x_a)^2 + (y_1 - y_a)^2 + (z_1 - z_a)^2} - \sqrt{(x_1 - x_c)^2 + (y_1 - y_c)^2 + (z_1 - z_c)^2} = C*(\Delta rxt_2),$$

$$\sqrt{(x_2 - x_a)^2 + (y_2 - y_a)^2 + (z_2 - z_a)^2} - \sqrt{(x_2 - x_c)^2 + (y_2 - y_c)^2 + (z_2 - z_c)^2} = C*(\Delta rxt_3);$$

where $(x_0, y_0, z_0)$ is coordinates of the starting location, $(x_1, y_1, z_1)$ is the coordinates of the first location, $(x_2, y_2, z_2)$ is the coordinates of the second location, $(x_a, y_a, z_a)$ is coordinates of one reference transceiver, $(x_c, y_c, z_c)$ is the coordinates of the location of the to-be-determined transceiver, $\Delta rxt_1$ is the first time delay difference value, $\Delta rxt_2$ is the second time delay difference value, $\Delta rxt_3$ is the third time delay difference value, and C is light speed.

This embodiment provides a positioning method for a transceiver. The present disclosure performs controlling the user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is the time difference value of receiving the first test signal by the reference transceiver and the to-be-determined transceiver, the second time delay difference value is the time difference value of receiving the second test signal by the reference transceiver and the to-be-determined transceiver, and the third time delay difference value is the time difference value of receiving the third test signal by the reference transceiver and the to-be-determined transceiver; and acquiring a height of the to-be-determined transceiver in the case that the to-be-determined transceiver and the reference transceiver are located at the same height, and determining the coordinates of the location of the to-be-determined transceiver on the basis of the height of the to-be-determined transceiver, the first time delay difference value, the second time delay difference value, the third time delay difference value, the coordinates of the first location and the coordinates of the second location. In the above manner, the coordinates of the location of an invisible to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved.

As shown in Fig. 1, the positioning method for the transceiver further includes: synchronizing a clock of the reference transceiver and a clock of the to-be-determined transceiver; and recording a clock time of receiving the first test signal by the reference transceiver as a first time, and recording a clock time of the receiving the first test signal by the to-be-determined transceiver as a second time.

As shown in Fig. 1, the positioning method for the transceiver further includes: acquiring the first time of receiving the first test signal by the reference transceiver and the second time of receiving the first test signal by the to-be-determined transceiver; and calculating a time difference value between the first time and the second time as the first time delay difference value.

As shown in Fig. 1, the positioning method for the transceiver further includes: calculating a distance corresponding to the first time delay difference value through the light speed and the first time delay difference value; and calculating the coordinates of the first location on the basis of the distance between the first location and the starting location, the distance corresponding to the first time delay difference value and the coordinates of the location of the reference transceiver.

In this embodiment, the user equipment is not limited to be necessarily a 5G terminal, and may also be another transceiver as long as a signal can be sent to a known transceiver at this point and the transceiver can calculate a time delay according to the received signal.

The present disclosure is transformed to be a reverse positioning surveying and mapping tool which may be deployed on the webmaster, and a specific operation process is as follows: deploying it on the webmaster as an example is taken as an example, and it may also be deployed on another universal server side. All the following tools refer specifically to this surveying and mapping tool.

Known parameters are inputted into a tool interface: a parameter 1, namely, a starting reference location of the UE; a parameter 2, namely, coordinates of a location of a reference base station A; and a parameter 3, namely, coordinates of a location of a reference base station B.

A movement trajectory of the terminal is drawn. The movement trajectory of the terminal is drawn according to a CAD construction drawing of a place. The movement trajectory includes: setting movement nodes of a terminal, a straight-line distance between the nodes, and time for staying at each node. A movement trajectory drawing may be inputted into a robot car, the robot car moves according to the movement trajectory, the terminal is put on the robot car, the terminal on the robot car uninterruptedly sends positioning signals according to a set period; and the base station receives the positioning signals, parses a time delay and reports the time delay to a tool side, the tool collects time delay numerical values of receiving the positioning signals by each base station at each node, and the tool calculates the coordinates of the location of the base station according to the above method herein and displays the coordinates on the tool interface.

A description is made by taking a current indoor UTDOA positioning technology of 5G as an example.

Before performing an indoor positioning service, first, coordinates of locations of two open-mounted RRUs are determined, which is easy to implement during project implementation in general, under normal circumstances, for example, in a supermarket environment, an RRU is open-mounted on a wall at an upper portion of a hallway, and for example, in an airport environment, it may be considered that an RRU is open-mounted at a gate. Inside the airport, an RRU is considered concealed for the sake of attractive appearance. The method of the present disclosure is on the premise of definitely determining the coordinates of the locations of the two RRUs, which are surveyed and mapped by using a total station. The coordinates $(x_a, y_a, z_a)$ and the coordinates $(x_b, y_b, z_b)$ need to be determined in advance. The coordinates of $RRU_c$ need to be determined, namely, $(x_c, y_c, z_c)$ is the coordinates needed to be determined according to the three location points of the UE and time delay differences for receiving signals by the RRUs.

A location point of the terminal is determined and is selected as long as the $RRU_a$, the $RRU_b$ and the $RRU_c$ can receive the signals. This point is recorded as a point 0 with coordinates being $(x_0, y_0, z_0)$. The UE sends signals at the point 0, and the $RRU_c$ and the $RRU_a$ receive the signals to calculate the time delay differences. Then the UE moves for the distance of d1 in any direction to reach a point 1 with the coordinates being $(x_1, y_1, z_1)$. The $RRU_a$, the $RRU_b$ and the $RRU_c$ receive the signals and calculate the time delay differences. Then the UE moves from the point 1 in any direction to reach a point 2 with the coordinates being $(x_2, y_2, z_2)$. The distance from the point 2 to the point 0 is d2, and the $RRU_a$, the $RRU_b$ and the $RRU_c$ receive the signals and calculate the time delay differences. Movement in an indoor environment may be regarded as that the terminals on the same floor have the same height, namely, $z_0 = z_1 = z_2$, so $z_1$ and $z_2$ also become the known quantities. Four expressions are listed according to the expressions (5), (6), (7) and (8) of the technology of the present disclosure, and $x_1$, $y_1$, $x_2$, $y_2$ are solved. Then the coordinates $(x_c, y_c, z_c)$ of the location of the $RRU_c$ are solved according to the expressions (9), (10) and (11).

This embodiment provides a positioning method for a transceiver, a positioning device for a transceiver and a storage medium. The present disclosure performs controlling a user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is the time difference value of receiving the first test signal by the reference transceiver and the to-be-determined transceiver, the second time delay difference value is the time difference value of receiving the second test signal by the reference transceiver and the to-be-determined transceiver, and the third time delay difference value is the time difference value of receiving the third test signal by the reference transceiver and the to-be-determined transceiver; and acquiring a height of the to-be-determined transceiver in the case that the to-be-determined transceiver and the reference transceiver are located at the same height, and determining the coordinates of the location of the to-be-determined transceiver on the basis of the height of the to-be-determined transceiver, the first time delay difference value, the second time delay difference value, the third time delay difference value, the coordinates of the first location and the coordinates of the second location. In the above manner, the coordinates of the location of an invisible to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved.

Please refer to Fig. 5, Fig. 5 is a schematic structural block diagram of a positioning device for a transceiver provided by the present disclosure.

As shown in Fig. 5, a positioning device 300 for a transceiver includes a processor 301 and a memory 302, the processor 301 is connected with the memory 302 through a bus 303, and the bus is, for example, an inter-integrated circuit (I2C) bus.

In an exemplary embodiment, the processor 301 is configured to provide calculating and control capacity and support running of the whole positioning device for the transceiver. The processor 301 may be a central processing unit (CPU), and may also be other general-purpose processors, digital signal processor (DSP), application specific integrated circuit (ASIC), field-programmable gate array (FPGA) or other programmable logic devices, discrete gate, transistor logic device, discrete hardware component or the like. The general-purpose processor may be a microprocessor or the processor may also be any conventional processor.

In an exemplary embodiment, the memory 302 may be a Flash chip, a read-only memory (ROM), a magnetic disk, an optical disk, a USB flash disk, a mobile hard disk drive or the like.

Those skilled in the art can understand that the structure shown in Fig. 5 is only a block diagram of a partial structure related to a solution in the present disclosure, and does not constitute a limitation to the positioning device for the transceiver to which the solution of the present disclosure is applied. Specifically, the positioning device for the transceiver may include more components or fewer components than those shown in drawing, or some components may be combined, or a different component arrangement may be used.

The processor 301 is configured to run a computer program stored in the memory 302 and implement, when executing the computer program, any positioning method for the transceiver provided by the present disclosure.

In an embodiment, the processor 301 is configured to run the computer program stored in the memory and implement, when executing the computer program, the following steps: controlling a user equipment to send a first test signal and a second test signal, respectively at a starting location and a first location, to a to-be-determined transceiver and at least one reference transceiver which is known in location; acquiring a first time delay difference value and a second time delay difference value, wherein the first time delay difference value is a time difference value of receiving the first test signal by the reference transceiver and the to-be-determined transceiver, and the second time delay difference value is a time difference value of receiving the second test signal by the reference transceiver and the to-be-determined transceiver; and acquiring a height of the to-be-determined transceiver in the case that the to-be-determined transceiver and the reference transceiver are located at the same height, and determining coordinates of a location of the to-be-determined transceiver on the basis of the height of the to-be-determined transceiver, the first time delay difference value, the second time delay difference value, and coordinates of the first location.

It needs to be noted that those skilled in the art can clearly know that for convenient and concise description, specific working processes of the above positioning device for the transceiver may refer to corresponding processes in the embodiment of the above positioning method for the transceiver, which is not repeated here.

The present disclosure further provides a storage medium, used for computer readable storage and storing one or more programs, the one or more programs being capable of being executed by one or more processors so as to implement any positioning method for the transceiver provided by the specification of the present disclosure.

The storage medium may be an internal storage unit of the positioning device for the transceiver in the above embodiment, for example, a hard disk or internal storage of the positioning device for the transceiver. The storage medium may also be an external storage device of the positioning device for the transceiver, for example, a plug-in hard disk, a smart media card (SMC), a secure digital (SD) card, a flash card or the like equipped on the positioning device for the transceiver.

Those ordinarily skilled in the art can understand all or some steps in the method disclosed above, a system and functional modules/units in the device may be implemented as software, firmware, hardware or an appropriate combination thereof. In a hardware embodiment, dividing of the functional modules/units mentioned in the above description does not necessarily correspond to dividing of physical components, for example, one physical component may have a plurality of functions, or one function or step may be executed jointly by a plurality of physical components. Some physical components or all the physical components may be implemented as software executed by a processor, such as a central processing unit, a digital signal processor or a microprocessor, or implemented as hardware, or implemented as an integrated circuit, such as an application-specific integrated circuit. This type of software may be distributed on a computer readable medium, and the computer readable medium may include a computer storage medium (or a non-transitory medium) and a communication medium (or transitory medium). It is known to those ordinarily skilled in the art that the term "computer storage medium" is included in a volatile and non-volatile, and removable and non-removable medium used for storing information (such as computer readable instructions, a data structure, a program module or other data) and implemented in any method or technology. The computer storage medium includes, but is not limited to, an RAM, an ROM, an EEPROM, a flash memory or other memory technology, a CD-ROM, a digital versatile disc (DVD) or other optical disk memory, a magnetic cassette, a magnetic tape, a disk memory or other magnetic storage devices, or any other media capable of being used for storing expected information and accessible by a computer. Besides, it is known to those ordinarily skilled in the art that the communication medium usually includes computer readable instructions, a data structure, a program module or other data in a modulated data signal of such as a carrier wave or other transmission mechanisms, and may include any information delivery medium.

The present disclosure provides a positioning method for a transceiver. The present disclosure performs controlling a user equipment to send a first test signal, a second test signal and a third test signal, respectively at a starting location, a first location and a second location, to a to-be-determined transceiver and at least one reference transceiver which is known in location; acquiring a first time delay difference value, a second time delay difference value and a third time delay difference value, wherein the first time delay difference value is the time difference value of receiving the first test signal by the reference transceiver and the to-be-determined transceiver, the second time delay difference value is the time difference value of receiving the second test signal by the reference transceiver and the to-be-determined transceiver, and the third time delay difference value is the time difference value of receiving the third test signal by the reference transceiver and the to-be-determined transceiver; and acquiring a height of the to-be-determined transceiver in the case that the to-be-determined transceiver and the reference transceiver are located at the same height, and determining the coordinates of the location of the to-be-determined transceiver on the basis of the height of the to-be-determined transceiver, the first time delay difference value, the second time delay difference value, the third time delay difference value, the coordinates of the first location and the coordinates of the second location. In the above manner, the coordinates of the location of an invisible to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved. In the technical solution of the present disclosure, the coordinates of the location of the to-be-determined transceiver are determined according to the time delay difference values of receiving the test signals by the to-be-determined transceiver and the reference transceiver at different locations, the difficulty of determining the coordinates of the location of the invisible transceiver is lowered, and the technical problem of high difficulty of surveying and mapping the coordinates of the invisible transceiver at present is solved.

It is to be understood that a term "and/or" used in the specification and the appended claims of the present disclosure refers to one of listed items or any combination or all possible combinations of more associated listed items and includes these combinations. It is to be noted that terms "comprise", "include" or any other variant thereof herein intend to cover a non-exclusive inclusion, so that a process, method, object or system including a series of elements not only includes those elements, but also includes other elements not listed clearly, or further includes inherent elements of such process, method, object or system. Without more limitations, an element defined by the sentence "including one" does not exclude that there are still other same elements in the process, method, object, or system including the element.

The above sequence numbers of the present disclosure are only for description and do not represent superiority and inferiority of the embodiments. The above is merely specific implementations of the present disclosure, but the protection scope of the present disclosure is not limited to this, any of those skilled in the art may easily figure out various equivalent variations or replacements within the technical scope disclosed by the present disclosure, and these variations or replacements are supposed to be covered within the protection scope of the present disclosure. Thus, the protection scope of the present disclosure is supposed to be subject to the protection scope of the claims.

## Claims

1. A positioning method for a transceiver, comprising:

   controlling a user equipment to send a first test signal, a second test signal and a third test signal, respectively at a starting location, a first location and a second location, to a to-be-determined transceiver and at least one reference transceiver which is known in location;
   acquiring a first time delay difference value, a second time delay difference value and a third time delay difference value, wherein the first time delay difference value is a time difference value of receiving the first test signal by the reference transceiver and the to-be-determined transceiver, the second time delay difference value is a time difference value of receiving the second test signal by the reference transceiver and the to-be-determined transceiver, and the third time delay difference value is a time difference value of receiving the third test signal by the reference transceiver and the to-be-determined transceiver; and
   acquiring a height of the to-be-determined transceiver in the case that the to-be-determined transceiver and the reference transceiver are located at the same height, and determining coordinates of a location of the to-be-determined transceiver on the basis of the height of the to-be-determined transceiver, the first time delay difference value, the second time delay difference value, the third time delay difference value, coordinates of the first location and coordinates of the second location.

2. The positioning method for the transceiver of claim 1, wherein before determining coordinates of a location of the to-be-determined transceiver on the basis of the height of the to-be-determined transceiver, the first time delay difference value, the second time delay difference value, the third time delay difference value, coordinates of the first location and coordinates of the second location, the method comprising:

controlling the user equipment to send a fourth test signal at the first location to at least two reference transceivers, and calculating a fourth time delay difference value of receiving the fourth test signal by the at least two reference transceivers; and

calculating coordinates of the first location on the basis of a distance between the first location and the starting location, the fourth time delay difference value and coordinates of locations of the at least two reference transceivers.

3. The positioning method for the transceiver of claim 2, wherein calculating coordinates of the first location comprising:

calculating the coordinates of the first location according to a first preset expression and a second preset expression, wherein the first preset expression and the second preset expression are respectively as follows:

$$d_{10} = \sqrt{(x_1 - x_0)^2 + (y_1 - y_0)^2 + (z_1 - z_0)^2} ,$$

$$\sqrt{(x_1 - x_a)^2 + (y_1 - y_a)^2 + (z_1 - z_a)^2} - \sqrt{(x_1 - x_b)^2 + (y_1 - y_b)^2 + (z_1 - z_b)^2} = C*(\Delta rxt_4) ,$$

wherein $(x_0, y_0, z_0)$ is coordinates of the starting location, $(x_1, y_1, z_1)$ is the coordinates of the first location, d10 is the distance between the first location and the starting location, $(x_a, y_a, z_a)$ is coordinates of one reference transceiver, $(x_b, y_b, z_b)$ is coordinates of another reference transceiver, C is light speed, and $\Delta rxt_4$ is the fourth time delay difference value; and

taking a result obtained by calculation according to the preset expressions as the coordinates of the first location.

4. The positioning method for the transceiver of claim 1, further comprising:

controlling the user equipment to send a fifth test signal at a third location to the to-be-determined transceiver and the reference transceiver respectively in the case that the to-be-determined transceiver and the reference transceiver are located at different heights;

acquiring a fifth time delay difference value of receiving the fifth test signal by the reference transceiver and the to-be-determined transceiver; and

determining the coordinates of the location of the to-be-determined transceiver on the basis of the first time delay difference value, the second time delay difference value, the third time delay difference value, the fifth time delay difference value, the coordinates of the first location, the coordinates of the second location and coordinates of the third location.

5. The positioning method for the transceiver of claim 4, wherein determining the coordinates of the location of the to-be-determined transceiver comprising:

calculating the coordinates of the location of the to-be-determined transceiver according to a third preset expression, a fourth preset expression and a fifth preset expression, wherein the third preset expression, the fourth preset expression and the fifth preset expression are respectively:

$$\sqrt{(x_0 - x_a)^2 + (y_0 - y_a)^2 + (z_0 - z_a)^2} - \sqrt{(x_0 - x_c)^2 + (y_0 - y_c)^2 + (z_0 - z_c)^2} = C*(\Delta rxt_1) ,$$

$$\sqrt{(x_1 - x_a)^2 + (y_1 - y_a)^2 + (z_1 - z_a)^2} - \sqrt{(x_1 - x_c)^2 + (y_1 - y_c)^2 + (z_1 - z_c)^2} = C*(\Delta rxt_2) ,$$

$$\sqrt{(x_2 - x_a)^2 + (y_2 - y_a)^2 + (z_2 - z_a)^2} - \sqrt{(x_2 - x_c)^2 + (y_2 - y_c)^2 + (z_2 - z_c)^2} = C*(\Delta rxt_3) ,$$

wherein $(x_0, y_0, z_0)$ is the coordinates of the starting location, $(x_1, y_1, z_1)$ is the coordinates of the first location, $(x_2, y_2, z_2)$ is the coordinates of the second location, $(x_a, y_a, z_a)$ is coordinates of one reference transceiver, $(x_c, y_c, z_c)$ is the coordinates of the location of the to-be-determined transceiver, $\Delta rxt_1$ is the first time delay difference value, $\Delta rxt_2$ is the second time delay difference value, $\Delta rxt_3$ is the third time delay difference value, and C is light speed.

6. The positioning method for the transceiver of claim 1, wherein before acquiring a first time delay difference value, the method further comprising:

acquiring a first time of receiving the first test signal by the reference transceiver and a second time of receiving the first test signal by the to-be-determined transceiver; and
calculating a time difference value between the first time and the second time as the first time delay difference value.

7. The positioning method for the transceiver of claim 6, wherein acquiring the first time delay difference value comprising:

synchronizing a clock of the reference transceiver and a clock of the to-be-determined transceiver; and
recording a clock time of receiving the first test signal by the reference transceiver as the first time, and recording a clock time of receiving the first test signal by the to-be-determined transceiver as the second time.

8. The positioning method for the transceiver of any one of claims 1-7, wherein before acquiring the coordinates of the locations of the two reference transceivers, and calculating the coordinates of the first location on the basis of the distance between the first location and the starting location, the first time delay difference value and the coordinates of the locations of the reference transceivers, the method comprising:

calculating a distance corresponding to the first time delay difference value through the light speed and the first time delay difference value; and
calculating the coordinates of the first location on the basis of the distance between the first location and the starting location, the distance corresponding to the first time delay difference value and coordinates of locations of the reference transceivers.

9. A positioning device for a transceiver, comprising a processor, a memory, a computer program stored on the memory and capable of being executed by the processor, and a data bus configured to implement connection and communication between the processor and the memory, wherein the computer program, when executed by the processor, implements steps of the positioning method for the transceiver of any one of claims 1 to 8.

10. A storage medium, used for computer readable storage and storing one or more programs, the one or more programs being capable of being executed by one or more processors so as to implement steps of the positioning method for the transceiver of any one of claims 1 to 8.

S101

Control a user equipment to send a first test signal, a second test signal and a third test signal, Respectively at a starting location, a first location and a second location, to a to-be-determined transceiver and at least one reference transceiver which is known in location

S102

Acquire a first time delay difference value, a second time delay difference value and a third time delay difference value, wherein the first time delay difference value is a time difference value of receiving the first test signal by the reference transceiver and the to-be-determined transceiver, the second time delay difference value is a time difference value of receiving the second test signal by the reference transceiver and the to-be-determined transceiver, and the third time delay difference value is a time difference value of receiving the third test signal by the reference transceiver and the to-be-determined transceiver

S103

Acquire a height of the to-be-determined transceiver in the case that the to-be-determined transceiver and the reference transceiver are located at the same height, and determine coordinates of a location of the to-be-determined transceiver on the basis of the height of the to-be-determined transceiver, the first time delay difference value, the second time delay difference value, the third time delay difference value, coordinates of the first location and coordinates of the second location

Fig. 1

S1011

Control a user equipment to send a fourth test signal at a first location to at least two reference transceivers, and calculate a fourth time delay difference value of receiving the fourth test signal by the at least two reference transceivers

S1012

Calculate coordinates of the first location on the basis of a distance between the first location and a starting location, the fourth time delay difference value and coordinates of locations of the at least two reference transceivers

Fig. 2

Webmaster

IP Network

Base station

Air interface

Terminal

Fig. 3

S301

Control the user equipment to send a fifth test signal at a third location to the to-be-determined transceiver and the reference transceiver respectively in the case that the to-be-determined transceiver and the reference transceiver are located at different heights

S302

Acquire a fifth time delay difference value of receiving the fifth test signal by the reference transceiver and the to-be-determined transceiver

S303

Determine coordinates of a location of the to-be-determined transceiver on the basis of a first time delay difference value, a second time delay difference value, a third time delay difference value, the fifth time delay difference value, coordinates of a first location, coordinates of a second location and coordinates of the third location

Fig. 4

300

301

Positioning device

Processor

303

302

Memory

Fig. 5

## INTERNATIONAL SEARCH REPORT

International application No.

**PCT/CN2023/072385**

### A. CLASSIFICATION OF SUBJECT MATTER

H04W 4/029(2018.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

CNTXT; DWPI; ENTXTC; ENTXT; CNKI: 测试信号, 待确定, 定位, 发送, 基站, 基准, 确定, 时间差, 时延, 收发机, 位置, 信号源, 坐标, test signals, positioning, transmission, base station, reference, determination, time difference, latency, transceiver, location, signal source, coordinates

### C. DOCUMENTS CONSIDERED TO BE RELEVANT

| Category* | Citation of document, with indication, where appropriate, of the relevant passages | Relevant to claim No. |
|---|---|---|
| A | CN 101009942 A (HUAWEI TECHNOLOGIES CO., LTD.) 01 August 2007 (2007-08-01) description, page 9 | 1-10 |
| A | CN 109743777 A (BEIJING UNIVERSITY OF POSTS AND TELECOMMUNICATIONS) 10 May 2019 (2019-05-10) entire document | 1-10 |
| A | CN 111836185 A (SUZHOU CLEVA PRECISION MACHINERY & TECHNOLOGY CO., LTD.) 27 October 2020 (2020-10-27) entire document | 1-10 |
| A | US 2015094081 A1 (QUALCOMM INC.) 02 April 2015 (2015-04-02) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 April 2023** | **06 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072385**

| Patent document cited in search report | | | Publication date (day/month/year) | Patent family member(s) | | | Publication date (day/month/year) |
|---|---|---|---|---|---|---|---|
| CN | 101009942 | A | 01 August 2007 | None | | | |
| CN | 109743777 | A | 10 May 2019 | None | | | |
| CN | 111836185 | A | 27 October 2020 | WO | 2020215711 | A1 | 29 October 2020 |
| US | 2015094081 | A1 | 02 April 2015 | WO | 2015047937 | A2 | 02 April 2015 |

Form PCT/ISA/210 (patent family annex) (July 2022)

**REFERENCES CITED IN THE DESCRIPTION**

**Patent documents cited in the description**

- CN 202210744625